# EUROPÄISCHE PATENTSCHRIFT

(11) **EP 2 614 958 B1**
(45) Veröffentlichungstag und Bekanntmachung des Hinweises auf die Patenterteilung: **20.08.2014**
(21) Anmeldenummer: 13156963.4
(22) Anmeldetag: 23.06.2008
(51) Int. Cl.: B41F 33/00, G01J 3/46

(54) **Verfahren zur Vermessung von Messfeldem**
Method for measuring colour fields
Procédé destinées à la mesure de champs de couleur.

(30) Priorität: 25.06.2007 DE 102007029211
(43) Veröffentlichungstag der Anmeldung: 17.07.2013
(62) Teilanmeldung aus: 08011365.7
(73) Patentinhaber: Heidelberger Druckmaschinen AG, 69115 Heidelberg (DE)
(72) Erfinder: Billmaier, Stefan, 69190 Walldorf (DE); Wenzel, Bernd, 69234 Dielheim (DE)

(56) Entgegenhaltungen:
- EP-A1- 0 518 559
- WO-A1-2005/108084
- US-A1- 2005 134 872

## Beschreibung

Die vorliegende Erfindung betrifft ein Verfahren zum Vermessen des Druckkontrollstreifens.

Die Qualität eines Druckprozesses wird daran gemessen, inwieweit die produzierten Bedruckstoffe mit dem Original einer Vorlage übereinstimmen. Ein wesentliches Qualitätsmerkmal ist dabei die möglichst farblich exakte Übereinstimmung von Bedruckstoff und Vorlage. Die Qualität der produzierten Bedruckstoffe kann zum einen durch Begutachtung des Druckers überprüft werden, wobei diese Begutachtung subjektiv und von der Person abhängig ist. Zur objektiven Qualitätskontrolle sind stattdessen schon seit geraumer Zeit Farbmessgeräte entwickelt worden, welche die produzierten Bedruckstoffe farbmetrisch oder densitometrisch erfassen. Meist wird dabei jedoch nicht das gesamte Druckbild vermessen, weil dies eine Vielzahl von Messpunkten und damit einen sehr langen Farbmessprozess bedeuten würde. Stattdessen werden meist sogenannte Druckkontrollstreifen von den Farbmessgeräten erfasst, welche sich außerhalb des Druckbildes im seitlichen Bereich des Bedruckstoffes befinden. Diese Druckkontrollstreifen können auch in der Druckmaschine durch dort eingebaute Farbmessgeräte erfasst werden, da auf den Druckkontrollstreifen nur eine begrenzte Anzahl von Farbmessungen durchgeführt werden muss, so dass auch bei hohen Druckgeschwindigkeiten, wie sie bei aktuellen Offsetdruckmaschinen im Bereich von 18.000 Bogen pro Stunde üblich sind, die Messwerte genau erfasst werden können. Ein solcher Druckkontrollstreifen ist aus der DE 3643721 A1 bekannt. Ein solcher Druckkontrollstreifen zur Kontrolle und Steuerung des Druckprozesses weist mehrere aneinander gereihte Farbfelder unterschiedlicher Farbe und Struktur auf, die den Farbzonen des Farbkastens einer Offsetdruckmaschine entsprechend aufgeteilt sind. Dabei sind die beim Druckvorgang verwendeten Druckfarben im Druckkontrollstreifen meist als Vollton und als Halbtöne enthalten. In der DE 3643721 A1 weist der Druckkontrollstreifen abwechselnd einfarbige Volltonfelder für jede Druckfarbe und außerdem einfarbige Rasterfelder für jede Druckfarbe auf. Der Druckkontrollstreifen in DE 3643721 A1 weist jeweils auf der Grenze zwischen zwei Farbzonen ein Graumessfeld auf. Damit ist jedoch keine optimale Regelung der Farbe nach den wenigen Graumessfeldern möglich.

Das Dokument EP 0 518 559 A1 zeigt ein Verfahren und ein Gerät zur Herstellung eines Druckkontrollstreifens. Dieser Druckkontrollstreifen dient dazu, die Qualität von Druckerzeugnissen zu überprüfen. Insbesondere wird dabei die Qualität der Farbwiedergabe beurteilt. Ein derartiger Druckkontrollsteifen besteht aus mehreren Farbmessfeldern in einer Reihe. Die Farbmessfelder umfassen einzelne Volltonfelder, sowie Farbmessfelder aus zwei, drei oder vier übereinander gedruckten Farben. Weiterhin sind ein Graumessfeld und ein Weißmessfeld enthalten. Der Benutzer hat die Möglichkeit, sich seinen eigenen Farbmessstreifen nach seinen eigenen Wünschen zusammenzustellen.

Die Patentanmeldung US 2005/0134872 A1 offenbart ein System und ein Verfahren zur Steuerung der Farbgebung in Druckmaschinen. Dabei kommen Farbmessstreifen in unterschiedlichen Ausführungen zum Einsatz. Die Farbmessstreifen werden dabei auf jeder Seite einer Zeitung aufgebracht, welche mit einer Rollenrotationsdruckmaschine hergestellt wird. Ein typischer Farbmessstreifen enthält die drei Grundfarben Cyan, Magenta, Yellow übereinander gedruckt als Graumessfeld sowie ein Schwarzmessfeld.

Das Dokument WO 2005/108084 A1 beschreibt ein Verfahren zur Erfassung von spektralen densitometrischen oder farblichen Messwerten auf bogenförmigen Bedruckstoffen (705) während des Druckprozesses in einer Bogendruckmaschine (1). Das Verfahren zeichnet sich dadurch aus, dass die Messwerte auf sich durch die Druckmaschine (1) bewegenden Bogen (705) ermittelt werden und mittels eines Rechners (200) als Steuerungsparameter zur Steuerung des Druckprozesses der Bogendruckmaschine (1) verwendet werden. Es ist Aufgabe der vorliegenden Erfindung ein Verfahren zur Farbdosierung zu schaffen, welches eine bessere Farbregelung ermöglicht.

Die vorliegende Aufgabe wird erfindungsgemäß durch Patentanspruch 1 gelöst. Vorteilhafte Ausgestaltungen der Erfindung sind den Unteransprüchen und den Zeichnungen zu entnehmen.

Gemäß der Vorliegenden Erfindung ist vorgesehen, dass jedes Messfeld aus der ersten Reihe auch wenigstens einmal in jeder der anderen Reihen vorhanden ist. Bei dieser Auslegung werden in jeder Farbzone zwei Messfelder gleicher Art vom Farbmessgerät erfasst, so dass eine doppelte Farbmessung für jedes Messfeld in jeder Farbzone möglich ist. Die so erfassten Messwerte können dann im Steuerungsrechner der Druckmaschine auf Plausibilität überprüft werden. Wenn sich die Messwerte gleicher Messfelder in einer Farbzone über eine zulässige Toleranz hinaus unterscheiden, so ist davon auszugehen, dass in dieser Farbzone Druckprobleme aufgetreten sind und die Farbmessungen nicht aussagekräftig sind. In diesem Fall geht der Steuerungsrechner davon aus, dass unplausible Messwerte vorliegen, und die Regelung der Farbdosiereinrichtung für die betroffene Farbzone kann statt dessen aufgrund von Messwerten einer benachbarten Farbzone vorgenommen werden. Zumindest können die Messwerte der Nachbarzonen dazu verwendet werden, zu ermitteln, inwieweit die als fehlerhaft erfassten Messwerte der erfassten Farbzone gegebenenfalls korrigiert werden müssen.

Die vorliegende Erfindung wird nachfolgend anhand mehrerer Figuren näher beschrieben und erläutert. Es zeigen:
*Figur 1**: einen geschlossenen Farbregelkreis*, bestehend aus Farbmessgerät, Steuerungsrechner und Farbdosiereinrichtung in der Druckmaschine,
Figur 2: einen doppelreihigen Druckkontrollstreifen mit redundanter Messfeldauslegung in einer Farbzone.

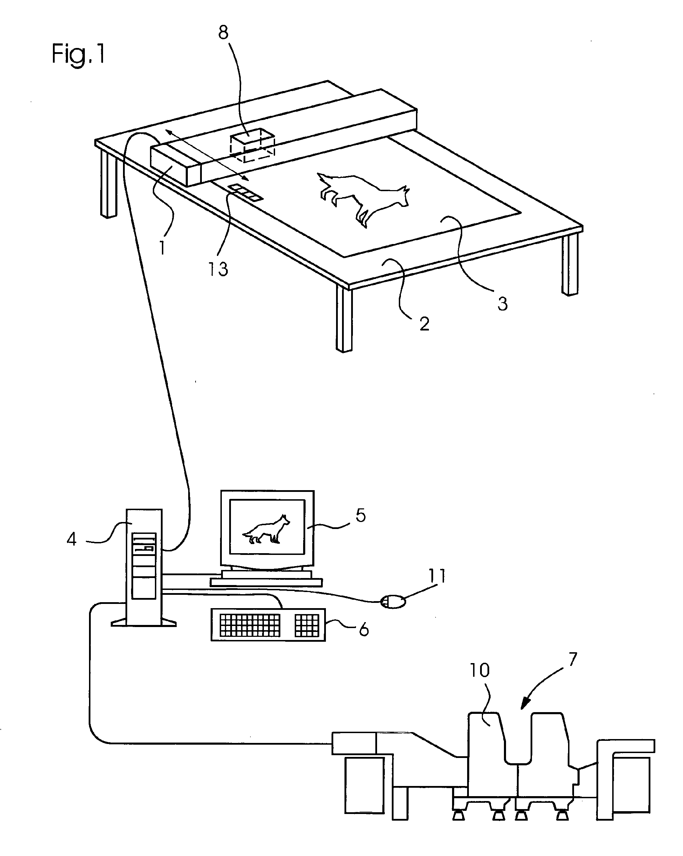

Der in Figur 1 gezeigte Farbregelkreis umfasst ein Farbmessgerät 1, einen Rechner 4 und die Farbdosiereinrichtung in den Druckwerken 10 einer Druckmaschine 7. Die genannten Geräte 1, 4, 7 sind über elektronische Kommunikationsverbindungen miteinander vernetzt. Das Farbmessgerät 1 ist in Figur 1 als separates Farbmessgerät ausgeführt, welches einen Messtisch 2 zur Aufnahme von produzierten Bedruckstoffen 3 aufweist. Statt dieses separaten Farbmessgeräts 1 kann auch ein in der Druckmaschine 7 integriertes sogenanntes Inline-Farbmessgerät verwendet werden, welches die Bedruckstoffe 3 in der Druckmaschine 7 vorzugsweise ausgangs des letzten Druckwerks 10 erfasst. Das separate Farbmessgerät 1 in Figur 1 verfügt über einen in Längsrichtung des Bedruckstoffs 3 verfahrbaren Messbalken und einen in Querrichtung des Bedruckstoffs 3 verfahrbaren Farbmesskopf 8, mit dem jeder beliebige Ort des Bedruckstoffs 3 farblich erfasst werden kann. Es ist zu erkennen, dass auf dem Bedruckstoff 3 neben dem Druckbild auch ein Druckkontrollstreifen 13 vorhanden ist. Dieser Druckkontrollstreifen 13 befindet sich im seitlichen Bereich des Bedruckstoffs 3. Um den Messvorgang zu verkürzen, reicht es aus, die Messfelder des Druckkontrollstreifens 13 durch das Farbmessgerät 1 zu erfassen. Die vom Farbmessgerät 1 erfassten Messwerte werden dann dem Rechner 4 zugeleitet, welcher als separater Rechner oder als Bestandteil des Steuerungsrechners der Druckmaschine 7 ausgeführt sein kann. Im Rechner 4 werden die erfassten Farbmesswerte mit den vorgegebenen Messwerten der Druckvorlage verglichen. Dazu kann die Druckvorlage in digitalisierter Form im Rechner 4 abgespeichert sein, oder der Rechner 4 erhält die Möglichkeit, auf entsprechende Daten in der Druckvorstufe zuzugreifen. Falls der Rechner 4 zwischen den Daten der Vorlage und den Messwerten außerhalb der Toleranz liegende Abweichungen feststellt, so werden die erfassten Abweichungen in Stellwerte für die Farbdosiereinrichtung in den Druckwerken 10 der Offsetdruckmaschine 7 umgerechnet. Die so berechneten Stellwerte werden dann an die Druckmaschine 7 übertragen und dort in entsprechende Änderungen zum Beispiel der Farbzonenöffnung bei zonalen Farbwerken in den Druckwerken 10 umgesetzt. Auf diese Art und Weise wird der Regelkreis zwischen Farbmessgerät 1 und Druckmaschine 7 geschlossen. Zur Anzeige und Bedienung verfügt der Rechner 4 über einen Bildschirm 5 und Eingabegeräte wie eine Maus 11 und eine Tastatur 6, mit denen der Drucker den Regelkreis der Farbdosierung beeinflussen kann. So kann der Drucker am Bildschirm 5 über die Maus 11 oder die Tastatur 6 die Art und Weise der Auswertung des Druckkontrollstreifens 13 durch den Rechner 4 bestimmen. Der Drucker kann zum Beispiel entscheiden, ob sämtliche Messfelder des Druckkontrollstreifens ausgewertet werden sollen oder ob nur bestimmte, für den vorliegenden Druckauftrag relevante Messfelder berücksichtigt werden sollen.

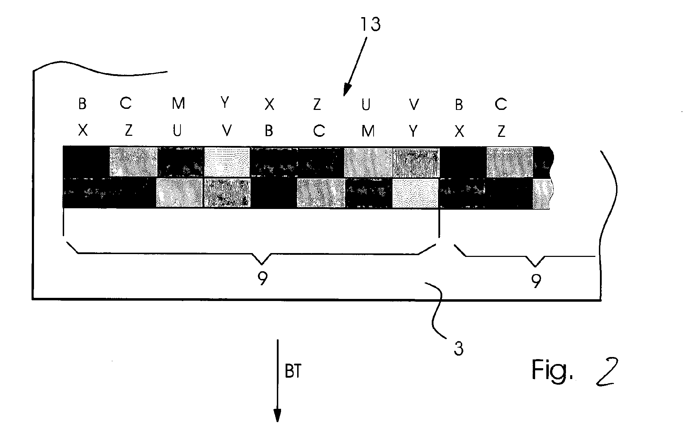

Der auf dem Bedruckstoff 3 vorhandene Druckkontrollstreifen 13 ist in der Figur 2 vergrößert dargestellt. Hierbei ist jeweils ein Ausschnitt des seitlichen Bereichs des Bedruckstoffs 3 dargestellt. Der Druckkontrollstreifen 13 ist in der Figur 2 jeweils für eine Farbzone 9 abgebildet. Diese Farbzone 9 wiederholt sich quer zur Transportrichtung des Bedruckstoffs BT über die gesamte Breite des Bedruckstoffs 2 hinweg. Im Bogenformat 102 sind üblicherweise 32 der Farbzonen 9 in einer Reihe aneinandergereiht vorhanden. Zwischen den einzelnen Farbzonen 9 kann der Druckkontrollstreifen 13 Lücken aufweisen oder zusätzliche Messfelder zum Beispiel für die Registerregelung oder Passerregelung. Insofern ist der Druckkontrollstreifen 13 auch nicht ausschließlich auf die Farbmessung begrenzt, sondern kann auch für andere Regelkreise genutzt werden.

Der Druckkontrollstreifen 13 in Figur 2 ist zweireihig aufgebaut, wobei die in einer Farbzone 9 vorhandenen Messfelder jeweils doppelt vorhanden sind. So finden sich die Farbe Schwarz B, die Buntfarben Cyan C, Magenta M und Gelb Y und die Sonderfarben X, Z, U, V sowohl in der oberen Reihe als auch in der unteren Reihe des Druckkontrollstreifens 13 wieder. Des Weiteren ist die Reihenfolge der Messfelder in einer Farbzone 9 zwischen der oberen und der unteren Reihe in Bezug auf die Reihenfolge unterschiedlich angeordnet, so dass gleichartige Messfelder nicht direkt übereinander liegen. Falls ein Messfeld durch Druckprobleme bedingt nicht auszuwerten ist, so kann das redundante Messfeld bei lokal begrenzten Druckfehlern dennoch korrekt ausgewertet werden, indem die unterschiedlichen Farbmesswerte eines gleichen Messfeldes im Rechner 4 auf Plausibilität geprüft werden, wobei dazu auch Farbmesswerte von Nachbarfarbzonen 9 berücksichtigt werden können. Es ist außerdem möglich, bei geringen Abweichungen zwischen gleichartigen Messfeldern in der oberen und unteren Reihe des Druckkontrollstreifens 13 im Rechner 4 die Messwerte zu mitteln und den Mittelwert für die Berechnung der Stellwerte in den Farbdosiervorrichtungen der Druckwerke 10 der Offsetdruckmaschine 7 zu verwenden. Dadurch ist es möglich, leichte Unterschiede, bedingt zum Beispiel durch Schablonieren, zu vermeiden.

### Bezugszeichenliste

- 1: Farbmessgerät
- 2: Messtisch
- 3: Bedruckstoff
- 4: Rechner
- 5: Bildschirm
- 6: Tastatur
- 7: Druckmaschine
- 8: Farbmesskopf
- 9: Farbzone
- 10: Druckwerk
- 11: Maus
- 13: Druckkontrollstreifen
- BT: Bedruckstofftransportrichtung
- B: Schwarz
- C: Cyan
- M: Magenta
- Y: Gelb
- U: Sonderfarbe
- X: Sonderfarbe
- V: Sonderfarbe
- Z: Sonderfarbe

## Patentansprüche

1. Verfahren zur Vermessung von Messfeldern (C, M, Y, B, X, U, V, Z) in Druckkontrollstreifen (13) auf Bedruckstoffen (3) mittels eines Messgeräts (1) und eines angeschlossenen Rechners (4),
**dadurch gekennzeichnet,**
**dass** die bei der Erfassung der in zwei oder mehreren Reihen vorhandenen Messfelder (C, M, Y, B, X, U, V, Z) die dabei gewonnenen Messwerte im Rechner (4) einer Plausibilitätsprüfung unterzogen werden, wobei jedes Messfeld (C, M, Y, B, X, U, V, Z) in jeder Reihe des Druckkontrollstreifens (13) wenigstens einmal vorhanden ist.

2. Verfahren nach Anspruch 1,
**dadurch gekennzeichnet,**
**dass** bei unplausiblen Messwerten in einer Farbzone (9) für die Regelung der Farbdosiereinrichtung in den Druckwerken (10) der Druckmaschine (7) die Messwerte einer benachbarten Farbzone (9) im Rechner (4) verwendet werden.

## Claims

1. Method for measuring measurement fields (C, M, Y, B, X, U, V, Z) in print control strips (13) on printing materials (3) during using a measuring device (1) and a connected computer (4),
**characterized in**
**that** the computer (4) subjects the measured values obtained in the measurement of the measuring fields (C, M, Y, B, X, U, V, Z), which are arranged in at least two rows, to a plausibility check, each measurement field (C, M, Y, B, X, U, V, Z) being present at least once in each row of the print control strip (13).

2. Method according to Claim 1,
**characterized in**
**that** in the case of an implausible measured value in an ink zone (9), the measured values of an adjacent ink zone (9) are used in the computer (4) for the purpose of controlling the ink metering device in the printing units (10) of the printing press (7).

## Revendications

1. Procédé pour la mesure de champs de mesure (C, M, Y, B, X, U, V, Z) dans des bandes de contrôles de pression (13) sur des substrats imprimés (3) au moyen d'un appareil de mesure (1) et un ordinateur raccordé (4),
**caractérisé en ce**
**que** les valeurs de mesure obtenues lors de la saisie des champs de mesure (C, M, Y, B, X, U, V, Z) sur deux ou plusieurs rangées sont soumises dans l'ordinateur (4) à un test de plausibilité, chaque champ de mesure (C, M, Y, B, X, U, V, Z) se trouvant au moins une fois dans chaque rangée de la bande de contrôle de pression (13).

2. Procédé selon la revendication 1
**caractérisé en ce**
**qu'**en cas de valeurs de mesure non plausibles dans une zone d'encrage (9), les valeurs de mesure d'une zone d'encrage voisine (9) sont utilisées dans l'ordinateur (4) pour le réglage du dispositif de dosage d'encre dans les groupes d'impression (10).
